Europäisches Patentamt

European Patent Office

Office européen des brevets

(19)

(11) Veröffentlichungsnummer: **0 163 771**
**A2**

(12) **EUROPÄISCHE PATENTANMELDUNG**

(21) Anmeldenummer: 84115881.9

(22) Anmeldetag: 20.12.84

(51) Int. Cl.⁴: **F 16 K 15/18**, F 15 B 13/01

(30) Priorität: 10.05.84 DE 8414265 U

(43) Veröffentlichungstag der Anmeldung: 11.12.85
Patentblatt 85/50

(84) Benannte Vertragsstaaten: BE CH DE FR GB IT LI NL SE

(71) Anmelder: KLB Hydrosystem GmbH, Ziegeleistrasse 15,
D-4040 Neuss 22 (DE)

(72) Erfinder: Jilderda, Jan Feiko, Netweg 7, NL-9901 EM
Appingedam (NL)
Erfinder: Kesseler, Günter, Hayenfeldweg 186,
D-4150 Krefeld (DE)

(74) Vertreter: Dipl.-Ing. H.G. Görtz, Dr.-Ing. J.H. Fuchs
Patentanwälte, Sonnenberger
Strasse 100 Postfach 26 26, D-6200 Wiesbaden (DE)

(54) Senkbrems-Sperrventil.

(57) Die Erfindung betrifft ein Senkbrems-Sperrventil zur lastunabhängigen hydraulischen Steuerung, wobei ein Ringraum über einer Rückführbohrung, in der eine Drosseleinrichtung angeordnet ist, mit einem Federraum unverschließbar verbunden ist. Dadurch wird ein Senkbrems-Sperrventil geschaffen, das im normalen Betrieb und bei Störungen in den Zuleitungen und bei Federbrüchen im Inneren des Ventils einen sicheren Betrieb erlaubt, indem die Last entweder weitergesteuert oder in ihrem Zustand gehalten werden kann. Das Steuerventil und ein Rückschlagventil sind gemeinsam in einer Gehäusebohrung als Patronenventil integriert, was in der Praxis eine einfache Handhabung ermöglicht und weniger Platz erfordert.

K  168

Senkbrems-Sperrventil

---

Die Erfindung betrifft ein Senkbrems-Sperrventil zur lastunabhängigen hydraulischen Steuerung mit einem Gehäuse, in dem Gehäuse vorgesehenen Betriebsanschlüssen, die in einer Richtung gegen die Federkraft einer im Inneren des Gehäuses angeordneten Verschlußanordnung und in der entgegengesetzten Richtung durch einen über einen Steueranschluß mit der Verschlußanordnung in Verbindung stehenden gegen die Verschlußanordnung wirkenden Aufsteuerkolben verbindbar sind, mit einem mit dem der Verbraucherseite zugeordneten Betriebsanschluß verbundenen Ringraum, der durch eine zur Verschlußanordnung gehörende Kolbenanordnung zum der Versorgerseite zugeordneten Betriebsanschluß hin verschließbar und öffenbar ist, wobei die Kolbenanordnung einen Steuerkolben aufweist, der eine Längsdurchgangsbohrung enthält, in der ein federbelastetes Ventil die hydraulische Vorentlastungsöffnung zum Versorgeranschluß verschließt, das mit Hilfe des Aufsteuerkolbens öffenbar ist, sowie mit einem an dem der Vorentlastungsöffnung abgekehrten Ende in der Kolbenanordnung angeordneten Federraum. Derartige Ventile werden zur Bewegung und zum Halten beispielsweise von Kränen eingesetzt.

Es sind derartige Senkbrems-Sperrventile bekannt, bei denen jedoch das federbelastete Ventil, das die hydraulische Vorentlastung besorgt, aus einem Hilfskolben besteht, an den die Feder, die sich am anderen Ende des Federraums abstützt, angreift. Beim Verschließen der Durchflußöffnung im ungesteuerten Betrieb wird über diesen Hilfskolben der Hauptkolben mitbewegt. Im gesteuerten Betrieb wirkt der Steuerdruck zuerst gegen diese Hilfskolbenfeder und bewegt den Hilfskolben innerhalb des Hauptkolbens. Dabei wird die zuvor bestehende Verbindung zwischen Federraum und Verbraucheranschluß geschlossen und es erfolgt eine hydraulische Vorentlastung. Anschließend wirkt der Steuerdruck zusätzlich gegen eine Schleppkolbenfeder, die auf der anderen Seite des Ringraumes angeordnet ist.

Wenn das Ventil im gesteuerten Betrieb geöffnet ist, wird es, sofern ein Rohrbruch auf der Verbraucherseite erfolgt, sich beim Absenken der Last ordnungsgemäß verhalten. Im Falle eines Bruchs der Hilfskolbenfeder und bei Abfall des Steuerdruckes, kann das Ventil nicht schließen. Bricht die Schleppkolbenfeder, so hat in diesem Betriebsfall die Hilfskolbenfeder den Aufsteuerkolben gegen den anliegenden Öldruck zu bewegen.

Diese Ventile haben den Nachteil, daß sie in ihrer Funktion lastabhängig sind, durch eine dynamische Dichtung zur Leckage neigen und im Falle eines Federbruchs zum unkontrollierten Abfallen der Last führen.

Der vorliegenden Erfindung liegt die Aufgabe zugrunde, ein Senkbrems-Sperrventil zu schaffen, das im Normalbetrieb und bei Störungen in den Zuleitungen und bei Federbrüchen im Inneren des Ventils einen sicheren Betrieb erlaubt, indem die Last entweder weiter gesteuert oder in ihrem Zustand gehalten werden kann.

Die Aufgabe für ein Senkbrems-Sperrventil der eingangs charakterisierten Art wird erfindungsgemäß dadurch gelöst, daß der Ringraum über eine Rückführbohrung, in der eine Drosseleinrichtung angeordnet ist, mit dem Federraum unverschließbar verbunden ist. Vorteilhafterweise ist die Drosseleinrichtung als Düse ausgebildet.

Es ist für die vorliegende Erfindung besonders wesentlich, daß eine andauernde Verbindung zwischen Ringraum und Federraum gegeben ist. Diese Verbindung wird durch eine Rückführbohrung im Inneren des Gehäuses sichergestellt. Grundsätzlich sind auch andere Verbindungsmöglichkeiten, die direkt von dem Verbraucheranschluß aus eine Verbindung zwischen Verbraucher- oder Lastseite mit dem Federraum herstellen, möglich. Für die gesamte Funktion des Senkbrems-Sperrventils muß nur sichergestellt sein, daß im Federraum ein Druck, der durch die Lastseite gesteuert wird, aufbaubar ist. Um eine hydraulische Vorentlastung für den gesteuerten Betrieb zu erreichen, muß in der Rückführverbindung eine Drosselung vorgesehen sein, die einen geringeren Zufluß von Öl erlaubt, als zum Abfließen durch das Vorentlastungsventil freigegeben wird. Dies kann durch eine einstellbare Drossel oder eine Düse erreicht werden. Durch die Verwendung einer Düse als Drosseleinrichtung kann abhängig vom Aufbau des Ventils die Drosselung durch die entsprechende Düse beeinflußt werden. Dies ist notwendig, da sonst das Ventil nicht mehr lastunabhängig arbeiten kann.

Gemäß einer weiteren vorteilhaften Ausgestaltung des erfindungsgemäßen Ventils stützt sich die Vorentlastungsventilfeder an dem der Vorentlastungsöffnung abgekehrten Ende des Steuerkolbens ab und eine Steuerkolbenfeder ist zwischen dem dem Ringraum abgekehrten Ende des Steuerkolbens und dem entgegengesetzten Ende des Federraumes angeordnet.

Durch diese Konstruktion wird erreicht, daß die Vorentlastungsventilfeder nur für die hydraulische Vorentlastung verwendet wird und somit auch nur dafür ausgelegt zu sein braucht. Die Steuerkolbenfeder wirkt als Gegenkraft für den Druck auf den Steuerkolben. Dadurch kann bei einem Bruch der Steuerkolbenfeder bei ungesteuertem Betrieb durch das geschlossene Vorentlastungsventil der Steuerkolben durch den über die Rückführverbindung ermöglichten Druckaufbau im Federraum schließen. Im gesteuerten Betrieb wird bei einem Bruch der Steuerkolbenfeder die Vorentlastungsventilfeder das Vorentlastungsventil bei abnehmendem Ansteuerdruck am Steueranschluß schließen und die Entlastung des Federraums beenden. Im nachfolgenden baut sich dann über die Rückführverbindung ebenfalls ein Druck im Federraum auf, der in der Lage ist, die Öffnung durch den Steuerkolben zu verschließen. Durch konstruktive Ausgestaltung kann auch bei einem Bruch der Vorentlastungsventilfeder ein Schließen des Vorentlastungsventils besorgt werden. Ohne einen Federbruch erfolgt die Schließbewegung mechanisch-hydraulisch.

Zweckmäßigerweise wird zusätzlich ein Rückschlagventil in der Verschlußordnung integriert, das ein schnelles Freigeben der Öffnung zwischen dem Verbraucher und Versorgung im ungesteuerten Betrieb erlaubt und als Umgehungsventil für das Steuerventil wirkt. Dies wird vorteilhafterweise dadurch erreicht, daß um den Steuerkolben konzentrisch eine Rückschlaghülse mit Verbindungsöffnungen zum Ringraum hin angeordnet ist. Zweckmäßigerweise weist die Rückschlaghülse eine Mitnehmereinrichtung für den Steuerkolben und der Steuerkolben eine Mitnehmereinrichtung für die Rückschlaghülse auf. Die Rückschlaghülse muß zur Funktion Verbindungsöffnungen zum Ringraum aufweisen, damit im gesteuerten Betrieb, in dem die Rückschlaghülse im Ruhezustand bleibt, über die Öffnung zwischen dem Steuerkolben und der Rückschlaghülse die Verbindung zwischen Verbraucher und Versorger hergestellt werden kann. Im ungesteuerten Betrieb wird durch den Druck über den Versorgungsanschluß die Rückschlaghülse aus der Schließstellung herausbewegt und ermöglicht den Durchfluß der Flüssigkeit zum Verbraucher hin. Der Steuerkolben wird einschließlich Vorentlastungsventil durch den inneren Anschlag der Mitnehmereinrichtung mitgenommen, so daß ein größerer Öffnungsquerschnitt freigegeben wird. Der Schließvorgang kann allein durch die Steuerkolbenfeder erfolgen, da in umgekehrter Richtung die Rückschlaghülse durch den Steuerkolben zwangsgesteuert ist. Der Steuerkolben weist im Bereich des dem Ringraum zugekehrten Endes eine die Mitnehmereinrichtung bildende Sitzfläche auf. Diese Sitzfläche kann als Mitnehmer und als Anschlag dienen, wobei die Ausgestaltung im Rahmen der dem Fachmann geläufigen Überlegungen variiert werden kann.

Zweckmäßigerweise ist zwischen dem dem Ringraum abgekehrten Ende der Rückschlaghülse und dem entgegengesetzten Ende des Federraumes eine Rückschlagfeder angeordnet. Diese Feder unterstützt die Schließbewegung der Rückschlaghülse, so daß das Schließen von der Durchflußöffnung mittels Rückschlagfeder und Steuerkolbenfeder durchgeführt wird. Beim Bruch der Rückschlagfeder kann der Verschluß durch die oben erwähnte Zwangssteuerung der Rückschlaghülse durch den Steuerkolben erfolgen. Bei dem Bruch der Steuerkolbenfeder geschieht das Schließen durch den Druck in der Federkammer. Die Rückschlagfeder kann sich selbstverständlich auch an einem im Federraum angeordneten Absatz oder ähnlichem abstützen.

Die Rückschlaghülse weist vorzugsweise eine dem Versorgeranschluß zugekehrte Druckfläche und eine gegen die Gehäuseinnenwand zum Ringraum hin abdichtende Dichtfläche auf. Der Steuerkolben ist an seinem die Öffnung zwischen Steuerkolben und Rückschlaghülse abdichtenden Ende vorteilhafterweise mit Steuerschlitzen versehen. Die Rückschlaghülse ist so ausgebildet, daß ein Verbraucherrückdruck nicht in der Lage ist, das Rückschlagventil ungewollt zu öffnen, da eine Differenzfläche fehlt.

Die Ausgestaltung im Bereich der Durchflußöffnung von Versorgeranschluß zu Verbraucheranschluß dient im ungesteuerten Betrieb der schnellen Öffnung bei Überschreiten eines durch die Federkräfte vorgegebenen Druckes und der sicheren leckfreien Abdichtung. Im Bereich der Durchflußöffnung von Verbraucheranschluß zu Versorgeranschluß dient die Ausgestaltung der Freigabe und dem Schließen des Rückschlaghülseninnenraums durch Steuerschlitze, entsprechend dem Ansteuerdruck und der Federgegenkräfte.

Die Anschrägung der Sitzflächen der einzelnen Ventile, d.h. die Dichtflächen zwischen Gehäuse und Rückschlaghülse, Rückschlaghülse und Steuerkolben und Steuerkolben und Vorentlastungsventilkugel beträgt vorteilhafterweise ca. 45°. Durch diese ausgewählte Anschrägung wird fertigungstechnisch eine bessere Anpassung der Flächen aneinander und eine sichere Abdichtung erreicht. Außerdem können dadurch andere Ventilparameter entsprechend den Erfordernissen angepaßt werden.

Das Steuerventil und das Rückschlagventil sind gemeinsam in einer Gehäusebohrung als Patronenventil integriert. Dies ermöglicht in der Praxis eine einfache Handhabung und erfordert weniger Platz.

Für die Funktion des gesamten Ventils müssen selbstverständlich die dem Fachmann geläufigen Abmessungen der Räume, Bohrungen und Druckflächen gewählt werden.

Durch die vorliegende Erfindung wird in einem Gehäuse ein Senkbrems-Sperrventil mit einem Umgehungsrückschlagventil als Patronenventil geschaffen, das ein Steuerventil, bestehend aus dem Steuerkolben und den zugehörigen Teilen, und mit entsprechenden funktionsgerechtem Aufbau im Bereich

der Öffnung und der Sitzflächen, das durch ein das Steuerventil umgehendes Rückschlagventil, ebenfalls mit dem für die Funktion notwendigen Aufbau im Bereich der Durchflußöffnung und der Sitzflächen, aufweist, das selbst bei Bruch einzelner Federn bei Bedarf sicher schließt und ein Absinken der Last verhindert. Ein undefinierter Zustand des Ventils bei auftretenden Fehlern im Inneren wird dadurch vermieden und das Lecken ausgeschlossen.

Ein weiterer Vorteil liegt im gesamten Aufbau, der eine Abstimmung des Ventils auf bestimmte gewünschte Betriebszustände und Eigenschaften ermöglicht. Dies kann durch die Auswahl und Abstimmung der Düse sowie der Federn erfolgen. Auch durch die Änderung des Kugeldurchmessers der das Vorentlastunsventil verschließenden Vorentlastungskugel kann die Funktion des Ventils beeinflußt werden. Durch die Anordnung aller Federn auf einer Seite der Durchflußöffnung und die Lastübernahme von nur einzelnen Federn in bestimmten Betriebszuständen ist eine zweckmäßige Dimensionierung der Federn möglich. So hat beispielsweise die Steuerkolbenfeder im gesteuerten Betrieb den Ansteuerdruck zu halten, während die Vorentlastungsventilfeder nur dem Vorentlastungsdruck entgegenwirkt. Im ungesteuerten Betrieb verteilt sich die Druckkraft auf die Steuerkolbenfeder und die Rückschlagfeder.

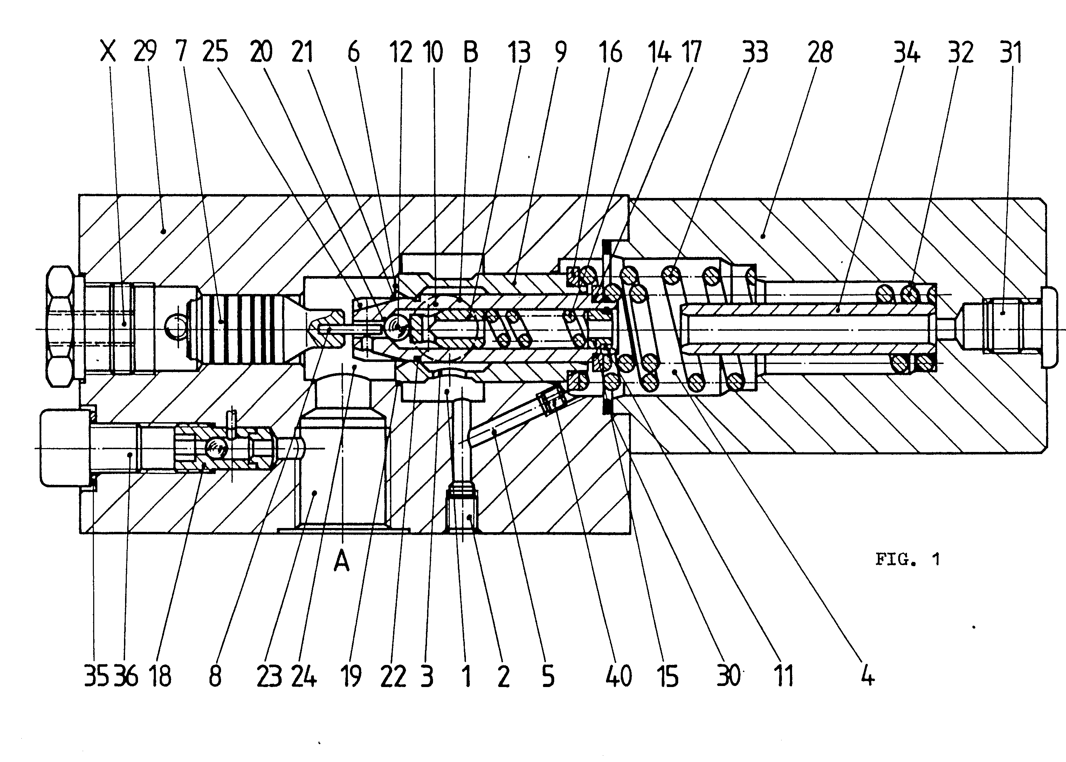

Ein Ausführungsbeispiel gemäß der vorliegenden Erfindung ist nachfolgend anhand der Fig. 1 beschrieben.

Die Zeichnungen stellen dar:

Fig. 1   einen Längsquerschnitt durch das erfindungsgemäße Ventil und

Fig. 2   eine Schaltungsanordnung des Ventils.

- 8 -                                    0163771

Das in Fig. 1 dargestellte Senkbrems-Sperrventil ist als
Patronenventil ausgebildet und besteht aus einem Gehäuse,
das einen Ventilkörper 29 und einen Ventildeckel 28 aufweist. In dem Ventilkörper befindet sich ein Anschluß A und
ein Anschluß B, der durch eine strichpunktierte kreisförmige Linie angedeutet ist. Zum Anschluß des Ventils an externe Versorgungsleitungen ist auf der Stirnseite der Ansteueranschluß X angeordnet. Der Anschluß A wird gemäß Fig.
2 extern mit einer Versorgungseinrichtung und der Anschluß
B mit der Last bzw. dem Verbraucher verbunden. Der Anschluß
A weist eine Vorkammer 23 und eine mit dieser Vorkammer in
Verbindung stehende Hauptkammer 24 auf. In dem ausgeführten
Ausführungsbeispiel ist an die Vorkammer 23 ein internes
Wechselventil für Sonderfunktionen angeschlossen. Der Anschluß B steht mit einem im Inneren des Ventils angeordneten Ringraum 1 in Verbindung. Die Öffnung zwischen Ringraum
1 und Hauptkammer 24 ist durch eine Verschlußanordnung, die
eine Kolbenanordnung mit Federn aufweist, verschlossen. Am
X-Anschluß, der der Ansteuerung des Ventils dient, ist ein
Aufsteuerkolben 7 vorgesehen, dessen eines Ende in die
Hauptkammer 24 hereinragt und einen Stift 8 aufweist, der
bewegbar in die Kolbenanordnung eingeführt ist. Bei am anderen Ende des Aufsteuerkolbens anliegendem Druck wird dieser in Richtung Kolbenanordnung bewegt, und dadurch eine
Verbindung des Anschlusses A mit dem Anschluß B erreicht.

Die Verschlußanordnung weist eine Rückschlaghülse 9 auf,
die konzentrisch einen Steuerkolben 10 umgibt. Im Inneren
des Steuerkolbens ist in einer Längsbohrung an dem dem
Stift 8 zugekehrten Ende eine hydraulische Vorentlastungskugel 12 angeordnet, die durch eine Kugelführung 13 und eine
Rückschlagventilfeder 14, die sich an einem Federanschlag
15 am Ende des Steuerkolbens abstützt, die Längsbohrung verschließt. Der Steuerkolben 10 ragt in die Hauptkammer 24
hinein, ohne mit seiner Stirnseite die Stirnseite des Aufsteuerkolbens 7 zu berühren. Der Aufsteuerkolben 7 und die Kolbenanordnung sind entlang einer gemeinsamen Längsachse angeordnet. Im geschlossenen Zustand weist die Stirnseite des Steuerkolbens 10 einen Abstand von der Stirnseite des Aufsteuerkolbens 7 auf. Der Stift 8 ragt in den Teil der Längsbohrung des Steuerkolbens 10 hinein, der durch die hydraulische Vorentlastungskugel 12 verschlossen ist. Wenn sich aufgrund des am Anschluß X anliegenden Öldruckes der Aufsteuerkolben 7 in Richtung Steuerkolben 10 bewegt, wird die hydraulische Vorentlastungskugel 12 durch den Stift 8 gegen die Kraft der Vorentlastungsventilfeder 14 verschoben, so daß die Öffnung 20 zur Hauptkammer 24 freigegeben wird.

Die um den Steuerkolben 10 angeordnete Rückschlaghülse 9 weist im Bereich des Ringraumes Öffnungen auf, so daß die im Ringraum 1 vorhandene Flüssigkeit direkt mit der Außenseite des Steuerkolbens 10 in Berührung steht. Der Steuerkolben 10 weist im Ringraumbereich eine Sitzfläche 22 auf, die als Anschlag für den Steuerkolben 10 sowie als Mitnehmereinrichtung für die Rückschlaghülse 9 in Richtung Ringraum 1 und für den Steuerkolben in Richtung Federraum 4 dient. Die Rückschlaghülse 9 wird an ihrem dem Ringraum 1 abgekehrten Ende durch eine Rückschlagfeder 33, sofern keine höhere Kraft aus der Hauptkammer 24 gegen die Hülse 9 wirkt, in ihrer Schließstellung gehalten. In gleicher Weise wird der Steuerkolben 10 durch eine Steuerkolbenfeder 32, die sich an dem dem Steuerkolbenende abgekehrten Ende des Federraumes 4 abstützt, gehalten. In diesem Ausführungsbeispiel stützt sich die Feder 33 nicht am Ende des Federraumes 4, sondern an einem im Federraum angeordneten Ansatz ab. Die Federn 32 und 33 sowie die Feder 14 sind alle auf einer Seite der Durchflußöffnung angeordnet und wirken alle der Wirkungsrichtung des Aufsteuerkolbens 7 entgegen. Ein Anschlag 34 für den Steuerkolben 10, der gleichzeitig als Führung für die Steuerkolbenfeder 32 dient, ragt von dem Ende, an dem sich auch die Kolbenfeder 32 abstützt, in den Federraum 4 konzentrisch hinein. Der Verschlußstopfen 31 verschließt eine aus konstruktiven Gründen vorgesehene Bohrung. Der Steuerkolben 10 weist an seinem der Feder zugekehrten Ende einen Federauflagering 17 auf.

Die Dichtfläche 19 zwischen Gehäuse 29 und Rückschlaghülse 9 und die Dichtfläche 21 zwischen Rückschlaghülse 9 und Steuerkolben 10 weisen zur leckfreien Ausbildung des Ventils und zur besseren Herstellung eine Anschrägung von 45° auf. Auch die Dichtfläche 20 für die Vorentlastungsventilkugel 12 ist 45° abgeschrägt.

Der Ringraum 1 ist mit dem Federraum 4 über eine Rückführbohrung 5 verbunden. Aus konstruktiven Gründen mündet die Rückführbohrung 5 in eine von der Außenseite des Ventils zum Ringraum 1 gehende Bohrung. Diese Bohrung ist an der Außenseite durch eine Verschlußkappe 2 verschlossen. In der Rückführbohrung 5 ist eine Düse 40 angeordnet.

In der Ruhestellung ist das gesamte Ventil geschlossen. Die Rückschlaghülse 9, der Steuerkolben 10 sowie die hydraulische Vorentlastungskugel 12 werden durch die entsprechenden Federn 33, 32 und 14 mechanisch und durch den hydraulischen Druck in dem Federraum 4 zugehalten. Ein Durchfluß von A nach B oder B nach A ist nicht möglich.

Wenn das Ventil von A nach B beispielsweise zum Heben einer Last durchströmt werden soll, wird der Flüssigkeitsstrom, normalerweise Öl, einen Druck im A-Kanal des Ventils aufbauen und in der Hauptkammer 24 gegen die Druckfläche 6 der Rückschlaghülse 9 drücken, so daß die Rückschlaghülse gegen die Federkraft der Rückschlaghülsenfeder 33 sich von der Dichtfläche 19 abhebt und damit eine Öffnung zum Ringraum 1 und dem damit verbundenen Anschluß B freigibt. Durch den inneren Anschlag 22, der als eine Sitzfläche ausgebildet ist, wird der Steuerkolben 10 mitbewegt und je nach an-

- 11 -

0163771

liegendem Druck eine maximale Öffnung, die durch die Federkräfte der Federn 32 und 33 bestimmt wird, freigegeben. Sofern in diesem Betriebszustand die Rückschlaghülsenfeder 33 bricht, kann der Durchfluß von A nach B durch die Mitnahmewirkung des Steuerkolbens 10 und die Federkraft der Feder 32 beeinflußt und beendet werden. Bei einem Bruch der Steuerkolbenfeder 32 sorgt der im Federraum vorliegende Druck für das Verschließen der Öffnung 21. Die Vorent- lastungsfeder 14 bleibt in ihrem Ruhezustand.

Soll ein Durchfluß von B nach A erreicht werden, so muß in der Aufsteuerleitung X ein Druck erzeugt werden, der zunächst bewirkt, daß eine hydraulische Vorentlastung zwischen dem mit dem Federraum 4 über die Rückführung 5 in Verbindung stehenden Ringraum 1 und der Hauptkammer 24 erreicht wird. Die hydraulische Vorentlastung bewirkt, daß der Federraum 4 drucklos wird und nur noch die Steuerkolbenfeder 32 beim Steuern des Durchflusses von B nach A wirksam ist und somit das Ventil lastunabhängig arbeiten kann.

Der Aufsteuerkolben 7 wird durch die hydraulische Kraft in Richtung Kolbenanordnung bewegt, so daß der Stift 8 die Vorentlastungskugel 12 gegen die Vorentlastungsfeder 14 verschiebt und dadurch ein Querschnitt freigegeben wird, der größer ist als der der Düse 40, so daß eine einwandfreie Entlastung des Federraumes erfolgt. Durch Erhöhen des Druckes in der Aufsteuerleitung X stößt die Stirnfläche des Aufsteuerkolbens 7 gegen die Stirnfläche des Steuerkolbens 10 und verschiebt diesen gegen die Steuerkolbenfeder 32, so daß ein Durchfluß über die Steuerschlitze 25 am Steuerkolben 10 und über die Verbindungsöffnungen 3 in der Rückschlaghülse 9 von B nach A erfolgen kann. Entsprechend des Druckes in der Aufsteuerleitung X wird der Steuerkolben 10 auf den jeweiligen beeinflußbaren Durchfluß bis zum maximalen Anschlag 34 geöffnet.

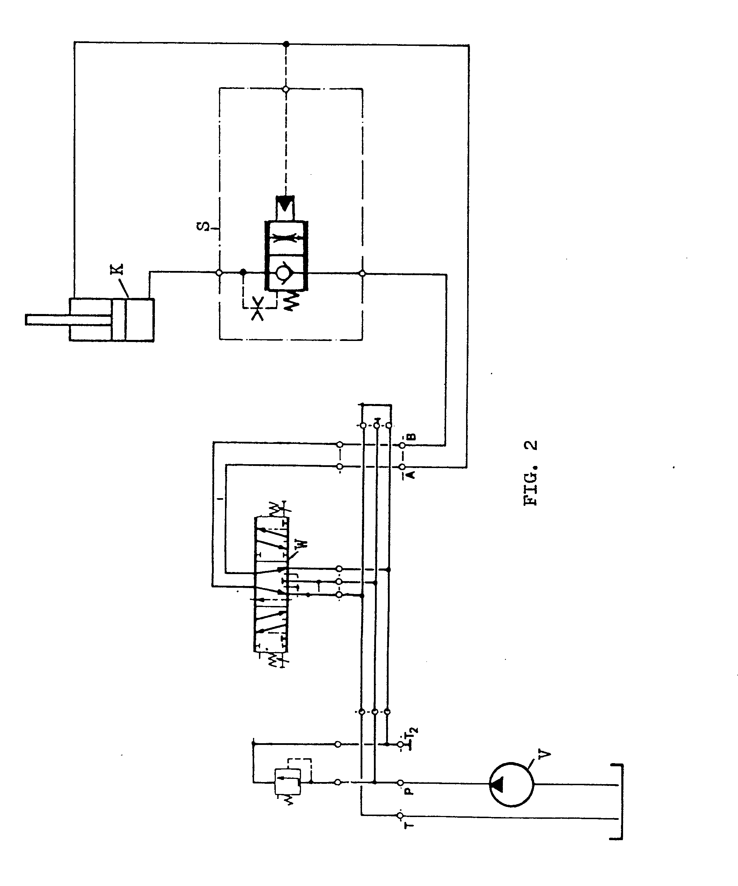

Im Falle eines Rohrbruches im Kreislauf (Fig. 2) sinkt der Aufsteuerdruck in der X-Leitung, so daß die Federkräfte der Federn 14, 33 und 32 bewirken, daß das Schließen durch Drucköl, das über die Rückführung 5 und die Düse 40 zufließt, unterstützt wird. Im Falle eines Federbruches der Federn 32 und 33 ist diese Schließfunktion ebenfalls gewährleistet, da die Rückschlaghülse 9, wie bereits oben beschrieben, durch den Steuerkolben 10 zwangsgesteuert wird und diese durch die über die Rückführung 5 und die Düse 40 zufließende hydraulische Größe auf ihre Sitze gedrückt wird. Bei einem Versagen der Vorentlastungsventilfeder 14 wird durch die Konstruktion der Kugelführung 13, die eine Längsbohrung aufweist, die in eine Querbohrung mündet, durch den im Federraum herrschenden Druck die Vorentlastungskugel in ihre Verschlußstellung gebracht.

Fig. 2 zeigt eine Schaltskizze mit einem Kolben K, einem Senkbrems-Sperrventil S, einem Wegeventil W und einer Versorgungseinrichtung V. Die Oberseite des Kolbens ist direkt mit dem Wegeventil und die Unterseite mit dem Bremssperrventil verbunden. Durch Umschalten des Wegeventils kann wahlweise Druck von der Versorgungseinrichtung auf die Oberseite oder auf die Unterseite des Kolbens gebracht werden. Die Oberseite des Kolbens ist gleichzeitig mit dem X-Anschluß des Senkbrems-Sperrventils verbunden. Wenn der Kolben gehoben werden soll, erfolgt ein Durchfluß des Senkbrems-Sperrventils von A nach B. In diesem Fall arbeitet das Senkbrems-Sperrventil als Rückschlagventil und die Rückschlaghülse wird, wie vorstehend beschrieben, in Abhängigkeit des anliegenden Druckes gegen die entgegenwirkenden Federkräfte zurückbewegt. Beim Absenken des Kolbens ist die Durchflußrichtung von B nach A, wobei die von B nach A durchfließende Ölmenge über den X-Anschluß gesteuert wird. Sobald sich der Kolben zu schnell abwärts bewegt, sinkt der Druck in der X-Ansteuerleitung, so daß das Senkbremsventil den Durchfluß von B nach A drosselt, und dadurch ein zu

- 13 -  0163771

schnelles Absinken der Last verhindert. Sobald sich der Druck in der X-Leitung wieder aufbaut, wird das Senkbremsventil weiter geöffnet und ein schnelleres Absinken des Kolbens ist möglich. In der Schaltskizze ist zusätzlich noch ein Druckbegrenzungsventil eingezeichnet, das nur zur Sicherung der beispielsweise in der Versorgungseinrichtung vorhandenen Ölpumpe dient.

Patentansprüche

1. Senkbrems-Sperrventil zur lastunabhängigen hydraulischen Steuerung mit einem Gehäuse, in dem Gehäuse vorgesehenen Betriebsanschlüssen, die in einer Richtung gegen die Federkraft einer im Inneren des Gehäuses angeordneten Verschlußanordnung und in der entgegengesetzten Richtung durch einen über einen Steueranschluß mit der Verschlußanordnung in Verbindung stehenden gegen die Verschlußanordnung wirkenden Aufsteuerkolben verbindbar sind, mit einem mit dem der Verbraucherseite zugeordneten Betriebsanschluß verbundenen Ringraum, der durch eine zur Verschlußanordnung gehörende Kolbenanordnung zum der Versorgerseite zugeordneten Betriebsanschluß hin verschließbar und öffenbar ist, wobei die Kolbenanordnung einen Steuerkolben aufweist, der eine Längsdurchgangsbohrung enthält, in der ein federbelastetes Ventil die hydraulische Vorentlastungsöffnung zum Versorgeranschluß verschließt, das mit Hilfe des Aufsteuerkolbens öffenbar ist, sowie mit einem an dem der Vorentlastungsöffnung abgekehrten Ende der Kolbenanordnung angeordneten Federraum, dadurch gekennzeichnet, daß der Ringraum (1) über eine Rückführbohrung (5), in der eine Drosseleinrichtung angeordnet ist, mit dem Federraum (4) unverschließbar verbunden ist.

2. Senkbrems-Sperrventil nach Anspruch 1, dadurch gekennzeichnet, daß die Drosseleinrichtung als Düse (40) ausgebildet ist.

3. Senkbrems-Sperrventil nach Anspruch 1 oder Anspruch 2, dadurch gekennzeichnet, daß die Vorentlastungsventilfeder (14) sich an dem der Öffnung (20) abgekehrten Ende des Steuerkolbens (10) abstützt und eine Steuerkolbenfeder (32) zwischen dem den Ringraum (1) abgekehrten Ende des Steuerkolbens (10) und dem entgegengesetzten Ende des Federraums (4) angeordnet ist.

4. Senkbrems-Sperrventil nach Anspruch 3, dadurch gekennzeichnet, daß um den Steuerkolben (10) konzentrisch eine Rückschlaghülse (9) mit Verbindungsöffnungen (3) zum Ringraum (1) hin angeordnet ist.

5. Senkbrems-Sperrventil nach Anspruch 4, dadurch gekennzeichnet, daß die Rückschlaghülse (9) eine Mitnehmereinrichtung (22) für die Zwangssteuerung des Steuerkolbens (10) in Richtung Federraum (4) aufweist.

6. Senkbrems-Sperrventil nach Anspruch 4 oder 5, dadurch gekennzeichnet, daß der Steuerkolben (10) eine Mitnehmereinrichtung (22) für die Zwangssteuerung der Rückschlaghülse (9) in Richtung Ringraum (1) aufweist.

7. Senkbrems-Sperrventil nach den Ansprüchen 5 und 6, dadurch gekennzeichnet, daß der Steuerkolben (10) im Bereich des dem Ringraum (1) zugekehrten Endes eine die Mitnehmereinrichtung bildende Sitzfläche (22) an der Rückschlaghülse (9) aufweist.

8. Senkbrems-Sperrventil nach einem der Ansprüche 4 bis 7, dadurch gekennzeichnet, daß zwischen dem dem Ringraum (1) abgekehrten Ende der Rückschlaghülse (9) und dem entgegengesetzten Ende des Federraumes (4) eine Rückschlaghülsenfeder (33) angeordnet ist.

9. Senkbrems-Sperrventil nach Anspruch 8, dadurch gekennzeichnet, daß die Rückschlaghülse (9) eine dem Versorgeranschluß (A) zugekehrte Druckfläche (6) und eine gegen die Gehäuseinnenwand zum Ringraum (1) hin abdichtende Dichtfläche (19) aufweist.

10. Senkbrems-Sperrventil nach Anspruch 9, dadurch gekennzeichnet, daß der Steuerkolben (10) an seinem die Öffnung (21) zwischen Steuerkolben (10) und Rückschlaghülse (9) abdichtenden Ende mit Steuerschlitzen (25) versehen ist.

11. Senkbrems-Sperrventil nach einem der Ansprüche 4 bis 10, dadurch gekennzeichnet, daß die Anschrägung der Sitzflächen (19, 20, 21) ca. 45° beträgt.

12. Senkbrems-Sperrventil nach einem der Ansprüche 4 bis 11, dadurch gekennzeichnet, daß das Steuerventil (10) und das Rückschlagventil (9) als Patronenventil ausgeführt sind.

1/2

0163771

FIG. 1

FIG. 2